# EUROPEAN PATENT APPLICATION

(11) **EP 3 684 085 A1**
(43) Date of publication of application: **22.07.2020**
(21) Application number: 18854705.3
(22) Date of filing: 09.07.2018
(51) Int. Cl.: H04W 4/02, H04W 28/06, H04W 64/00

(54) **METHOD FOR REPORTING AND ACQUIRING LOCATION INFORMATION, DEVICE AND COMPUTER STORAGE MEDIUM**

(30) Priority: 11.09.2017 CN 201710812135
(71) Applicant: ZTE Corporation, Shenzhen, Guangdong 518057 (CN)
(72) Inventor: WANG, Yuanyuan, Shenzhen Guangdong 518057 (CN); CHEN, Shijun, Shenzhen Guangdong 518057 (CN); CHEN, Dawei, Shenzhen Guangdong 518057 (CN)
(74) Representative: Baudler, Ron
(86) International application number: PCT/CN2018/095018
(87) International publication number: WO 2019/047614

(57) **Abstract**

The embodiment of the present disclosure discloses a method for reporting and acquiring location information, a device and a computer storage medium. The method for reporting location information includes: receiving a location information acquisition request sent by a positioning request device; determining relative location information of a current location of a location calculating device relative to a specified reference location based on the location information acquisition request; and sending location information carrying the relative location information to the positioning request device.

## Description

### CROSS-REFERENCE TO RELATED APPLICATION

This application is filed based on and claims priority to Chinese Patent Application No. 201710812135.1, filed on September 11, 2017, the entire contents of which are hereby incorporated by reference.

### TECHNICAL FIELD

The present disclosure relates to the field of mobile communications, and in particular, to a method and a device for reporting and acquiring location information, and a computer storage medium.

### BACKGROUND

Location service (LCS) is a new value-added service provided by mobile communication networks. This kind of service obtains location information (longitude and latitude, moving speed, etc.) of a terminal through wireless positioning technologies, and provides the location information to the terminal, a mobile communication network or other external entities, thereby realizing various location-related services. Currently, the Long Term Evolution (LTE) technology supports multiple positioning methods, including such as Global Navigation Satellite System (GSNN), Observed Time Difference of Arrival (OTDOA), Wireless Fidelity (WiFi), Time Based Service (TBS), barometric pressure sensor positioning, Uplink Time Difference of Arrival (UTDOA), Bluetooth and so on.

The existing positioning technologies such as GSNN, TBS and the like support terminal positioning requirements from a network side and a terminal side. When a location calculating site is inconsistent with a location service requesting site, location information transmission is involved. Currently, sent location information at least includes a location information unit of longitude and latitude information. As the longitude and latitude information requires relatively large number of bytes, network resource consumption is overlarge when positioning is performed in dense cells.

### SUMMARY

Embodiments of the present disclosure are intended to provide a method and a device for reporting and acquiring location information, and a computer storage medium to solve the above problem.

According to an aspect of the embodiments of the present disclosure, there is provided a method for reporting location information, applied to a location calculating device and including: receiving a location information acquisition request sent by a positioning request device; determining relative location information of a current location of the location calculating device relative to a specified reference location based on the location information acquisition request; and sending location information carrying the relative location information to the positioning request device.

According to another aspect of the embodiments of the present disclosure, there is provided method for acquiring location information, applied to a positioning request device and including: sending a location information acquisition request to a location calculating device; receiving location information sent by the location calculating device; parsing carried relative location information out of the location information; and calculating actual location information of the location calculating device according to the relative location information and specified reference location information.

According to another aspect of the embodiments of the present disclosure, there is provided a device for reporting location information, applied to a location calculating device and including: a request receiving module configured to receive a location information acquisition request sent by a positioning request device; a location calculating module configured to determine relative location information of a current location of the location calculating device relative to a specified reference location based on the location information acquisition request received by the request receiving module; and an information reporting module configured to send location information carrying the relative location information to the positioning request device.

According to another aspect of the embodiments of the present disclosure, there is provided a device for acquiring location information, applied to a positioning request device and including: a request sending module configured to send a location information acquisition request to a location calculating device; an information receiving module configured to receive location information sent by the location calculating device; an information parsing module configured to parse carried relative location information out of the location information received by the information receiving module; and a location determining module configured to calculate actual location information of the location calculating device according to the relative location information parsed out by the information parsing module and specified reference location information.

According to another aspect of the embodiments of the present disclosure, there is provided a computer-readable storage medium, storing thereon a computer program, wherein the computer program, when executed by a processor, causes the processor to implement steps of the method for reporting location information according to the embodiments of the present disclosure; or the computer program, when executed by a processor, causes the processor to implement steps of the method for acquiring location information according to the embodiments of the present disclosure.

According to another aspect of the embodiments of the present disclosure, there is provided a device for reporting location information, including: a processor and a memory for storing a computer program capable of being executed by the processor, wherein when the computer program is executed by the processor, the processor implements steps of the method for reporting location information according to the embodiments of the present disclosure when executing the computer program.

According to another aspect of an embodiment of the present disclosure, there is provided a device for acquiring location information, including: a processor and a memory for storing a computer program capable of being executed by the processor, wherein when the computer program is executed by the processor, the processor implements steps of the method for acquiring location information according to the embodiments of the present disclosure when executing the computer program.

In order to improve positioning capacity of a cell and reduce resources occupied by location information, the method and the device provided by the embodiments of the present disclosure provide a solution for sending relative location information, so as to achieve a purpose of compressing transmission data volume. Therefore, the problems in the related art that the number of bytes required by longitude and latitude information is relatively large, and network resource consumption is overlarge during transmission of the location information is solved, and positive technical effect are achieved.

The foregoing description is only a summary of the technical solutions of the embodiments of the present disclosure, and in order to clearly understand the technical solutions of the embodiments of the present disclosure, enable implementation according to the contents of the description, and make the above and other objects, features, and advantages of the embodiments of the present disclosure more apparent and easily understood, specific implementations of the embodiments of the present disclosure will be described below.

### BRIEF DESCRIPTION OF THE DRAWINGS

Various additional advantages and benefits will become apparent to those of ordinary skill in the art upon reading the following detailed description of the embodiments. The drawings are only for the purpose of illustrating the embodiments and are not to be construed as limiting the embodiments of the present disclosure. Also, like reference numerals are used to refer to like parts throughout the drawings. In the drawings:
FIG. 1 is a first flowchart of a method for reporting location information according to an embodiment of the present disclosure;
FIG. 2 is a second flowchart of a method for reporting location information according to an embodiment of the present disclosure;
FIG. 3 is a third flowchart of a method for reporting location information according to an embodiment of the present disclosure;
FIG. 4 is a fourth flowchart of a method for reporting location information according to an embodiment of the present disclosure;
FIG. 5 is a fifth flowchart of a method for reporting location information according to an embodiment of the present disclosure;
FIG. 6 is a sixth flowchart of a method for acquiring location information according to an embodiment of the present disclosure;
FIG. 7 is a seventh flowchart of a method for acquiring location information according to an embodiment of the present disclosure;
FIG. 8 is an eighth flowchart of a method for acquiring location information according to an embodiment of the present disclosure;
FIG. 9 is a ninth flowchart of a method for acquiring location information according to an embodiment of the present disclosure;
FIG. 10 is a tenth flowchart of a method for acquiring location information according to an embodiment of the present disclosure;
FIG. 11 is a block diagram of a device for reporting location information according to an embodiment of the present disclosure; and
FIG. 12 is a block diagram of a device for acquiring location information according to an embodiment of the present disclosure

### DETAILED DESCRIPTION

Exemplary embodiments of the present disclosure will be described in more detail below with reference to the accompanying drawings. Although exemplary embodiments of the present disclosure are shown in the drawings, it should be understood that the present disclosure can be embodied in various forms and should not be limited by the embodiments set forth herein. Rather, these embodiments are provided for thorough understanding of the present disclosure and to fully convey the scope of the present disclosure to those skilled in the art.

In order to solve the problem of overlarge network resource consumption caused by transmission of location information including longitude and latitude information when a location calculating site is inconsistent with a location service requesting site in the related art, embodiments of the present disclosure provide a method and a device for reporting and acquiring location information. Thereinafter, detailed implementing processes of the embodiments of the present disclosure will be described through several specific embodiments.

An embodiment of the present disclosure provides a method for reporting location information, which is applied to a location calculating device, and the location calculating device is a terminal or a server.

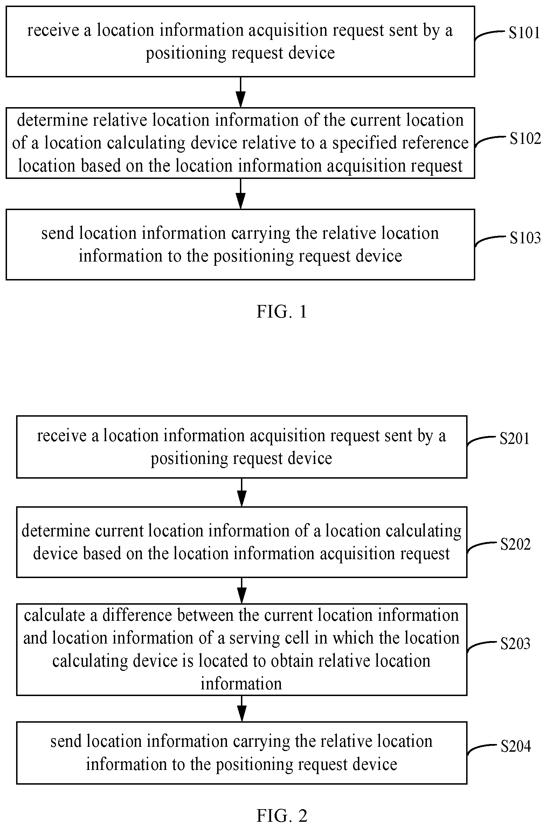

As shown in FIG. 1, the method of the embodiment includes the following steps.

At step S101, a location information acquisition request sent by a positioning request device is received.

At step S 102, relative location information of a current location of the location calculating device relative to a specified reference location is determined based on the location information acquisition request.

At step S 103, location information carrying the relative location information is sent to the positioning request device.

In an embodiment of the present disclosure, a relative location information unit is added to a location information unit of the sent location information, and the determined relative location information is filled in the relative location information unit. In the embodiment, the existing location information unit is modified to include the relative location information unit, thereby realizing transmission of the relative location information.

In another embodiment of the present disclosure, the sent location information further carries identification information for indicating that the sent location information is relative location information. In specific implementation, at least one bit of identifier needs to be added to the location information to indicate what is sent is relative location information. That is to say, in the embodiment, when the sent location information carries the relative location information, an identification bit is used as an identifier, so that a location information receiving end may determine whether the location information is relative location information according to the identifier.

In order to reduce resources occupied by the location information, according to the method provided by the embodiment of the present disclosure, a solution for sending the relative location information is provided, so as to achieve a purpose of compressing transmission data volume. Therefore, the problems in the related art that the number of bytes required by longitude and latitude information is relatively large, and network resource consumption is overlarge during transmission of the location information are solved.

The embodiments of the present disclosure further provide a method for reporting location information, which is applied to a location calculating device, and as shown in FIG. 2, the method in the embodiment includes the following steps.

At step S201, a location information acquisition request sent by a positioning request device is received.

At step S202, a current location information of the location calculating device is determined based on the location information acquisition request.

In the embodiment, a manner for determining the current location information of the location calculating device includes, but is not limited to, performing location calculation by using one or any combination of the following algorithms: GNSS, WiFi, OTDOA, TBS, UTDOA, Inertial Measurement Unit (IMU), Bluetooth, barometric pressure sensor positioning, and the like.

In the embodiment, the determined current location information at least includes longitude and latitude information of the location calculating device, and of course, may further include reliability information, altitude information, and the like.

At step S203, a difference between the current location information and location information of a serving cell in which the location calculating device is located is calculated to obtain the relative location information.

At step S204, location information carrying the relative location information is sent to the positioning request device.

In an embodiment of the present disclosure, a relative location information unit is added to a location information unit of the sent location information, and the determined relative location information is filled in the relative location information unit.

In another embodiment of the present disclosure, the sent location information further carries identification information for indicating that the sent location information is relative location information.

Optionally/possibly, in an embodiment of the present disclosure, the sent location information further carries at least one of the following information: altitude information of the current location, reliability information of the relative location information, reliability information of the altitude information, and identification information of the serving cell. In a specific embodiment, the carried information is filled in the relative location information unit.

Optionally, in an embodiment of the present disclosure, in order to facilitate the location information receiving end to obtain the location information of the serving cell, the location information of the serving cell may be carried together with the above information in the location information to be sent.

In order to reduce resources occupied by the location information, according to the method provided by the embodiment of the present disclosure, a solution for calculating the relative location information by using the location information of the serving cell and sending the relative location information is provided, so as to achieve a purpose of compressing transmission data volume. Therefore, the problems in the related art that the number of bytes required by longitude and latitude information is relatively large, and network resource consumption is overlarge during transmission of the location information are solved.

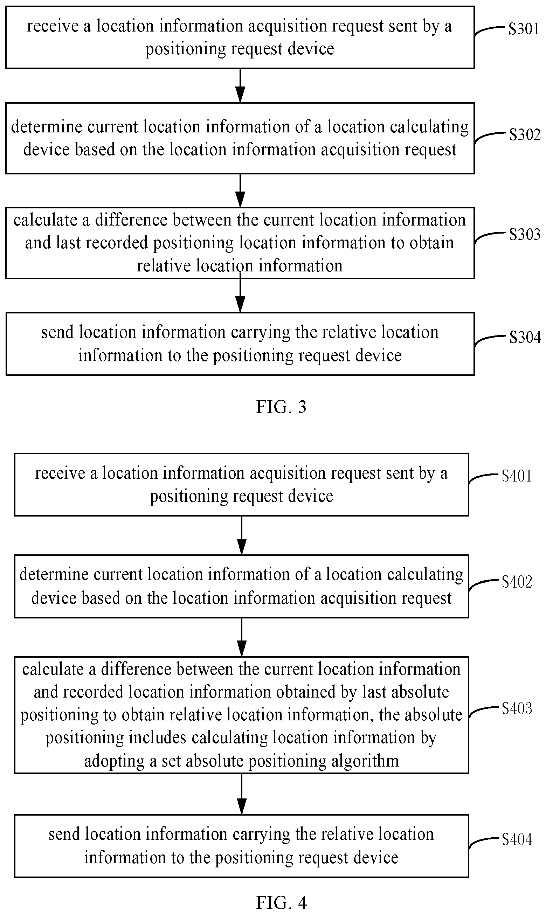

In an embodiment of the present disclosure, there is provided a method for reporting location information, which is applied to a location calculating device, and as shown in Fig. 3, the method includes the following steps.

At step S301, a location information acquisition request sent by a positioning request device is received.

At step S302, a current location information of the location calculating device is determined based on the location information acquisition request.

In the embodiment, a manner for determining the current location information of the location calculating device includes, but is not limited to, performing location calculation by using one or any combination of the following algorithms: GNSS, WIFI, OTDOA, TBS, UTDOA, IMU, Bluetooth, barometric pressure sensor positioning, and the like.

In the embodiment, the determined current location information at least includes longitude and latitude information of the location calculating device, and of course, may further include reliability information, altitude information, and the like.

At step S303, a difference between the current location information and last recorded positioning location information is calculated to obtain the relative location information.

That is, in the embodiment, the location calculating device supports a mechanism of saving at least location information of the previous time and location information of the current time.

At step S304, location information carrying the relative location information is sent to the positioning request device.

In an embodiment of the present disclosure, a relative location information unit is added to a location information unit of the sent location information, and the determined relative location information is filled in the relative location information unit.

In another embodiment of the present disclosure, the sent location information further carries identification information for indicating that the sent location information is relative location information.

Optionally/possibly, in an embodiment of the present disclosure, the sent location information further carries at least one of the following information: altitude information of the current location, reliability information of the relative location information, and reliability information of the altitude information. In a specific embodiment, the carried information is filled in the relative location information unit.

Optionally/possibly, in an embodiment of the present disclosure, in addition to the relative location information, the location calculating device also transmits location information obtained through absolute positioning to the positioning request device periodically or as required according to preset configuration information. The absolute positioning includes: calculating location information by adopting a set absolute positioning algorithm. The absolute positioning algorithm includes one of the following algorithms: a GSNN positioning algorithm, an OTDOA positioning algorithm, a WiFi positioning algorithm, a TBS positioning algorithm, a UTDOA positioning algorithm, and a Bluetooth positioning algorithm. It should be noted that once the original location information and the relative location information need to be sent at the same time, only the location information obtained by absolute positioning is sent at the current time.

Optionally/possibly, in an embodiment of the present disclosure, for the current location information of the location calculating device, the current time may be configured by a high layer or configured or requested by a requesting side.

Optionally/possibly, in an embodiment of the present disclosure, for the current location information of the location calculating device, the current time may be determined by positioning measurement time.

In order to reduce resources occupied by the location information, according to the method provided by the embodiment of the present disclosure, a solution for calculating the relative location information by using the last positioning location information and sending the relative location information is provided, so as to achieve a purpose of compressing transmission data volume. Therefore, the problems in the related art that the number of bytes required by longitude and latitude information is relatively large, and network resource consumption is overlarge during transmission of the location information are solved.

In an embodiment of the present disclosure, there is provided a method for reporting location information, which is applied to a location calculating device, and as shown in FIG. 4, the method includes the following steps.

At step S401, a location information acquisition request sent by a positioning request device is received.

At step S402, a current location information of the location calculating device is determined based on the location information acquisition request.

At step S403, a difference between the current location information and recorded location information obtained by last absolute positioning is calculated to obtain the relative location information. The absolute positioning includes: calculating location information by adopting a set absolute positioning algorithm.

The absolute positioning algorithm includes one of the following algorithms: a GSNN positioning algorithm, an OTDOA positioning algorithm, a WiFi positioning algorithm, a TBS positioning algorithm, a UTDOA positioning algorithm, and a Bluetooth positioning algorithm.

In the embodiment, only the location information calculated by adopting the absolute positioning algorithm is used as the basis for calculating the relative location, and the reliability of the location information is improved.

At step S404, location information carrying the relative location information is sent to the positioning request device.

Optionally/possibly, in an embodiment of the present disclosure, the location information is sent to the positioning request device according to a configured location information reporting period.

In an embodiment of the present disclosure, a location information reporting period is received from the positioning request device, and the location information is sent to the positioning request device according to the location information reporting period. In another embodiment of the present disclosure, the location information is sent to the positioning request device according to a location information reporting period configured by a high layer.

In addition, in the embodiment, the above location information reporting period is less than or equal to a period of sending the location information obtained through the absolute positioning to the positioning request device.

The method according to this embodiment differs from the embodiment described with reference to FIG. 3 in implementation manner of the step S403, and the implementation processes of other steps may refer to the embodiment described with reference to FIG. 3, and are not described repeatedly in this embodiment.

In order to reduce resources occupied by the location information, according to the method provided by the embodiment of the present disclosure, a solution for calculating the relative location information by using the location information obtained by the last absolute positioning and sending the relative location information is provided, so as to achieve a purpose of compressing transmission data volume. Therefore, the problems in the related art that the number of bytes required by longitude and latitude information is relatively large, and network resource consumption is overlarge during transmission of the location information are solved.

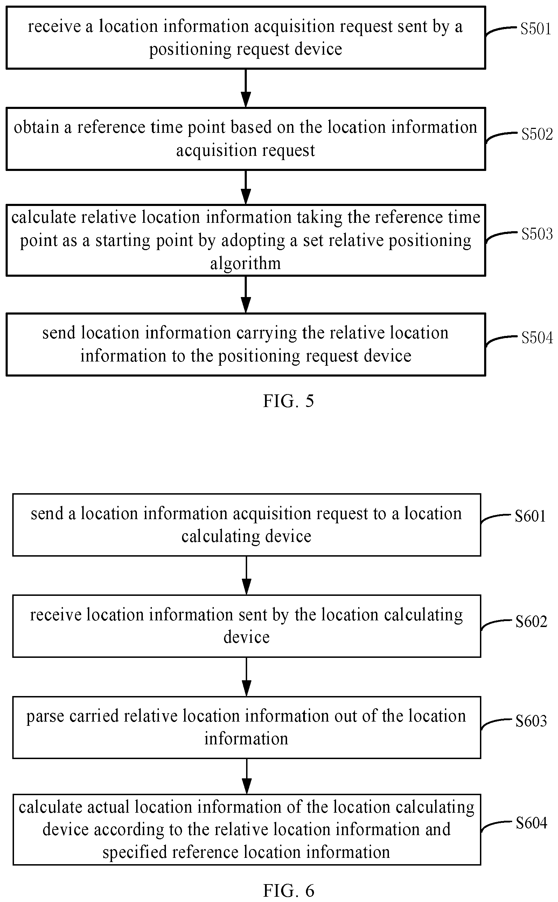

In an embodiment of the present disclosure, there is provided a method for reporting location information, which is applied to a location calculating device, and as shown in FIG. 5, the method in the embodiment includes the following steps.

At step S501, a location information acquisition request sent by a positioning request device is received.

At step S502, a reference time point is obtained based on the location information acquisition request.

In an embodiment of the present disclosure, a manner for obtaining a reference time point includes: determining the reference time point in a high-level or opposite-end configuration mode. In an alternative embodiment, the reference time point may be determined by a time at which an absolute location is measured.

It should be noted that, in an embodiment of the present disclosure, the relative location information needs to be cleared every time the reference time point is changed.

At step S503, relative location information taking the reference time point as the starting point is calculated by adopting a set relative positioning algorithm.

In the embodiment of the present disclosure, the relative positioning algorithm includes, but is not limited to: IMU or Pedestrian Dead Reckoning (PDR), etc. With these methods, the relative location information is directly calculated.

At step S504, location information carrying the relative location information is sent to the positioning request device.

In an embodiment of the present disclosure, a relative location information unit is added to a location information unit of the sent location information, and the determined relative location information is filled in the relative location information unit.

In another embodiment of the present disclosure, the sent location information further carries identification information for indicating that the sent location information is relative location information.

Optionally/possibly, in an embodiment of the present disclosure, the step S504 is implemented by: sending the location information to the positioning request device according to a configured location information reporting period. That is, the location information is reported at an interval of one configured reporting period.

The embodiments of the present disclosure are also applicable to a case of reporting the location information after receiving the request, and in this case, a timestamp of a time at which the location information is reported is carried in the sent location information. Carrying the timestamp facilitates the positioning request device to determine a cut-off time of the received relative location information.

Optionally/possibly, in an embodiment of the present disclosure, the location information is sent to the positioning request device according to a configured location information reporting period.

In an embodiment of the present disclosure, a location information reporting period is received from the positioning request device, and the location information is sent to the positioning request device according to the location information reporting period. In another embodiment of the present disclosure, the location information is sent to the positioning request device according to a location information reporting period configured by a high layer.

Optionally/possibly, in an embodiment of the present disclosure, the sent location information further carries at least one of the following information: altitude information of the current location, reliability information of the relative location information, and reliability information of the altitude information. In a specific embodiment, the carried information is filled in the relative location information unit.

Optionally/possibly, in an embodiment of the present disclosure, the location calculating device supports a mechanism of saving at least location information of the previous time and location information of the current time.

Optionally/possibly, in an embodiment of the present disclosure, in addition to the relative location information, the location calculating device also transmits location information obtained through absolute positioning to the positioning request device periodically or as required according to preset configuration information. The absolute positioning includes: calculating location information by adopting a set absolute positioning algorithm. The absolute positioning algorithm includes one of the following algorithms: a GSNN positioning algorithm, an OTDOA positioning algorithm, a WiFi positioning algorithm, a TBS positioning algorithm, a UTDOA positioning algorithm, and a Bluetooth positioning algorithm. It should be noted that once the original location information and the relative location information need to be sent at the same time, only the location information obtained by absolute positioning is sent at the current time. In addition, in the embodiment, the above location information reporting period is less than or equal to a period of sending the location information obtained through the absolute positioning to the positioning request device.

In order to reduce resources occupied by the location information, according to the method provided by the embodiments of the present disclosure, a solution for calculating, based on the last positioning location information, the relative location information by adopting a relative location calculation algorithm and sending the relative location information is provided, so as to achieve a purpose of compressing transmission data volume. Therefore, the problems in the related art that the number of bytes required by longitude and latitude information is relatively large, and network resource consumption is overlarge during transmission of the location information are solved.

In an embodiment of the present disclosure, there is provided a location information acquisition method, which is applied to a positioning request device, and the positioning request device is a terminal or a server.

As shown in FIG. 6, the method in the embodiment includes the following steps.

At step S601, a location information acquisition request is sent to a location calculating device.

Optionally/possibly, in the embodiment, a relative location reporting period may be sent to the location calculating device.

At step S602, location information sent by the location calculating device is received.

At step S603, carried relative location information is parsed out of the location information.

In an embodiment of the present disclosure, the carried relative location information is parsed out of the location information by: parsing the location information unit in the location information, and extracting the relative location information from the relative location information unit in the location information unit.

In another embodiment of the present disclosure, the carried relative location information is parsed out of the location information by: detecting identification information carried in the location information, and when the detected identification information indicates that the sent location information is relative location information, parsing the carried relative location information out of the location information.

At step S604, actual location information of the location calculating device is calculated according to the relative location information and specified reference location information.

In the method according to the embodiments, the actual location information of the location calculating device is obtained by using the relative location information sent by the location calculating device, and the problem of overlarge network resource consumption due to that all location information such as longitude and latitude information needs to be sent among devices in the related art is solved.

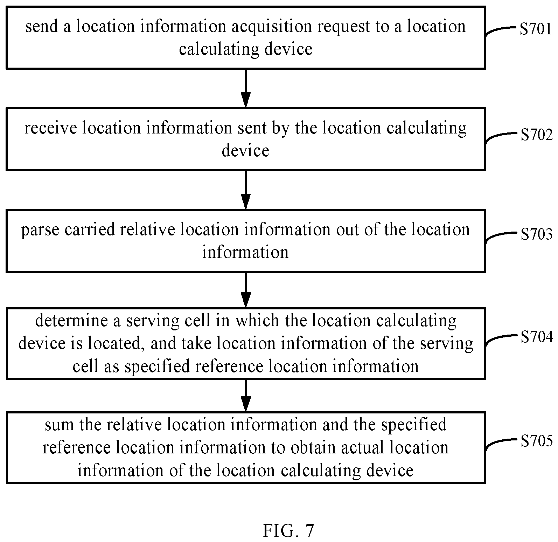

In an embodiment of the present disclosure, there is provided a method for acquiring location information, which is applied to a positioning request device, and as shown in FIG. 7, the method in this embodiment includes the following steps.

At step S701, a location information acquisition request is sent to a location calculating device.

At step S702, location information sent by the location calculating device is received.

At step S703, carried relative location information is parsed out of the location information.

In an embodiment of the present disclosure, the carried relative location information is parsed out of the location information by: parsing the location information unit in the location information, and extracting the relative location information from the relative location information unit in the location information unit.

In another embodiment of the present disclosure, the carried relative location information is parsed out of the location information by: detecting identification information carried in the location information, and when the detected identification information indicates that the sent location information is relative location information, parsing the carried relative location information out of the location information.

At step S704, a serving cell in which the location calculating device is located is determined, and location information of the serving cell is used as the specified reference location information.

In an embodiment of the present disclosure, the serving cell in which the location calculating device is located is determined specifically by: parsing carried unique identification information of the serving cell out of the received location information; and determining the serving cell in which the location calculating device is located according to the unique identification information.

That is to say, when sending the relative location information, the location calculating device also sends the unique identification information of the serving cell in which the location calculating device is located, which is convenient for the positioning request device to determine the serving cell.

At step S705, the relative location information and the location information of the serving cell (i.e., the specified reference location information) are summed to obtain the actual location information of the location calculating device.

In the method according to the embodiments, the actual location information of the location calculating device is obtained by using the relative location information sent by the location calculating device, and the problem of overlarge network resource consumption due to that all location information such as longitude and latitude information needs to be sent among devices in the related art is solved.

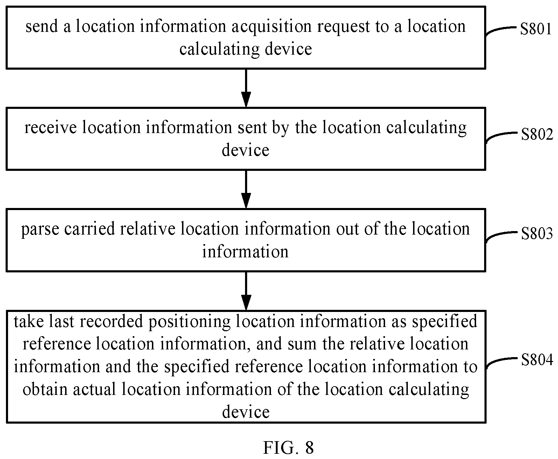

In an embodiment of the present disclosure, there is provided a method for acquiring location information, which is applied to a positioning request device, and as shown in FIG. 8, the method in the embodiment includes the following steps.

At step S801, a location information acquisition request is sent to a location calculating device.

At step S802, location information sent by the location calculating device is received.

At step S803, carried relative location information is parsed out of the location information.

In an embodiment of the present disclosure, the carried relative location information is parsed out of the location information by: parsing the location information unit in the location information, and extracting the relative location information from the relative location information unit in the location information unit.

In another embodiment of the present disclosure, the carried relative location information is parsed out of the location information by: detecting identification information carried in the location information, and when the detected identification information indicates that the sent location information is relative location information, parsing the carried relative location information out of the location information.

At step S804, last recorded positioning location information is taken as the specified reference location information, and the relative location information and the last recorded positioning location information (i.e., the specified reference location information) are summed to obtain the actual location information of the location calculating device.

In the embodiment, the last recorded positioning location information may be location information obtained according to absolute positioning algorithm which is reported by the location calculating device and received last time by the positioning request device, or location information obtained from last calculation based on the reference location information and recorded by the positioning request device.

In the method according to the embodiments, the actual location information of the location calculating device is obtained by using the relative location information sent by the location calculating device, and the problem of overlarge network resource consumption due to that all location information such as longitude and latitude information needs to be sent among devices in the related art is solved.

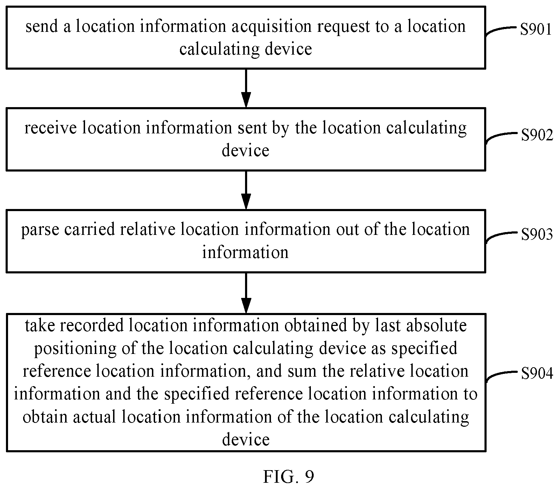

In an embodiment of the present disclosure, there is provided a method for acquiring location information, which is applied to a positioning request device, and as shown in FIG. 9, the method in the embodiment includes the following steps.

At step S901, a location information acquisition request is sent to a location calculating device.

At step S902, location information sent by the location calculating device is received.

At step S903, carried relative location information is parsed out of the location information.

At step S904, recorded location information obtained by last absolute positioning of the location calculating device is taken as the specified reference location information, and the relative location information and the specified reference location information are summed to obtain the actual location information of the location calculating device.

In the embodiment, only the received location information obtained by the last absolute positioning of the location calculating device is used as a basis for location calculation, and the reliability of the calculated location information is improved.

The method in this embodiment differs from the embodiment described with reference to FIG. 8 in the implementation manner of the step S904, and the implementation processes of other steps may refer to the embodiment described with reference to FIG. 8, and are not described repeatedly in this embodiment.

In the method according to the embodiments, the actual location information of the location calculating device is obtained by using the relative location information sent by the location calculating device, and the problem of overlarge network resource consumption due to that all location information such as longitude and latitude information needs to be sent among devices in the related art is solved.

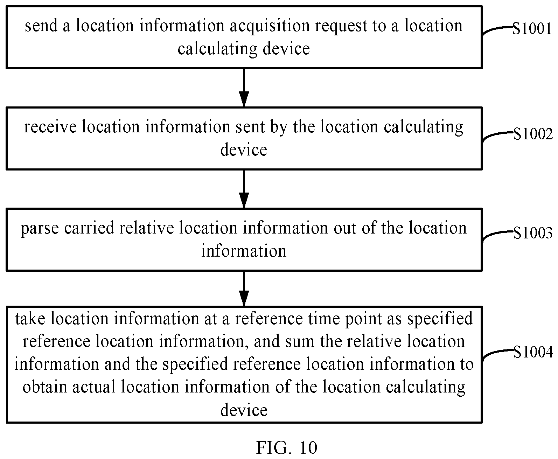

In an embodiment of the present disclosure, there is provided a method for acquiring location information, which is applied to a positioning request device, and as shown in FIG. 10, the method in this embodiment includes the following steps.

At step S1001, a location information acquisition request is sent to a location calculating device.

At step S1002, location information sent by the location calculating device is received.

At step S1003, carried relative location information is parsed out of the location information.

At step S 1004, location information at a reference time point is taken as the specified reference location information, and the relative location information and the specified reference location information are summed to obtain the actual location information of the location calculating device.

The embodiment is a solution for a case where the location calculating device sends the relative location information according to the method described in the embodiment with respective to FIG. 5.

In the embodiment, after receiving the location information, the positioning request device sends "reference time point" information for calculating the relative location information to the location calculating device.

In the method according to the embodiments, the actual location information of the location calculating device is obtained by using the relative location information sent by the location calculating device, and the problem of overlarge network resource consumption due to that all location information such as longitude and latitude information needs to be sent among devices in the related art is solved.

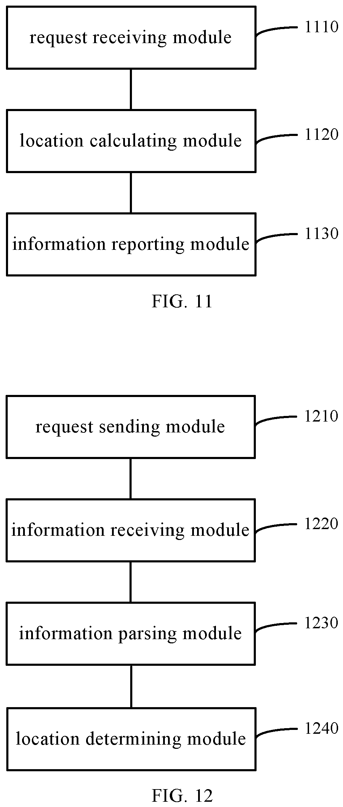

In an embodiment of the present disclosure, there is provided a device for reporting location information, which is applied to a location calculating device, and as shown in FIG. 11, the device includes a request receiving module 1110, a location calculating module 1120 and an information reporting module 1130.

The request receiving module 1110 is configured to receive a location information acquisition request sent by a positioning request device.

The location calculating module 1120 is configured to determine relative location information of a current location of the location calculating device relative to a specified reference location based on the location information acquisition request received by the request receiving module 1110.

The information reporting module 1130 is configured to send location information carrying the relative location information to the positioning request device.

The location calculating device according to the embodiment of the present disclosure may be any device capable of performing positioning, for example, a wearable device, and a mobile phone.

The device provided by the embodiment of the present disclosure may be an added functional module in a processor in the location calculating device or implemented by improving or reusing an existing functional module. The processor may be, but is not limited to, one or more of a CPU, FPGA, DSP, microprocessor, and the like.

Based on the above structural description, several specific and implementations under the above structure are given below to detail or optimize the function of the device according to the embodiment of the present disclosure, so as to make the implementation of the embodiment of the present disclosure more convenient and accurate. It is to be noted that the following features may be arbitrarily combined without conflict.

In an embodiment of the present disclosure, a relative location information unit is added to a location information unit of the location information sent by the information reporting module 1130, and the relative location information is filled in the relative location information unit.

Optionally/possibly, in an embodiment of the present disclosure, the location information sent by the information reporting module 1130 further carries identification information for indicating that the sent location information is relative location information.

Optionally/possibly, in an embodiment of the present disclosure, the location calculating module 1120 is configured to determine current location information of the location calculating device, and calculate a difference between the current location information and location information of a serving cell where the location calculating device is located to obtain the relative location information.

In the embodiment, the location information also carries unique identification information of the serving cell, which is convenient for an information receiving end to determine the serving cell.

Optionally/possibly, in an embodiment of the present disclosure, the location calculating module 1120 is configured to determine current location information of the location calculating device, and calculate a difference between the current location information and last recorded positioning location information to obtain the relative location information.

Optionally/possibly, in an embodiment of the present disclosure, the location calculating module 1120 is configured to determine current location information of the location calculating device, and calculate a difference between the current location information and recorded location information obtained by last absolute positioning to obtain the relative location information. The absolute positioning includes: calculating location information by adopting a set absolute positioning algorithm. The absolute positioning algorithm includes one of the following algorithms: a GSNN positioning algorithm, an OTDOA positioning algorithm, a WiFi positioning algorithm, a TBS positioning algorithm, and a Bluetooth positioning algorithm.

Optionally/possibly, in an embodiment of the present disclosure, the location calculating module 1120 is configured to acquire a reference time point, and calculate the relative location information taking the reference time point as a starting point by adopting a set relative positioning algorithm. The relative positioning algorithm includes one of the following algorithms: an IMU positioning algorithm and a PDR positioning algorithm.

In the embodiment, the information reporting module 1130 is configured to send the location information to the positioning request device according to a configured location information reporting period, or send the location information carrying a timestamp of a time at which the location information is reported to the positioning request device.

Optionally/possibly, in an embodiment of the present disclosure, the information reporting module 1130 is further configured to send, according to preset configuration information, location information obtained by absolute positioning to the positioning request device periodically or as needed.

Optionally/possibly, in an embodiment of the present disclosure, the location information sent by the information reporting module 1130 further carries one of the following information: altitude information of the location calculating device, reliability information of the altitude information, and reliability information of the relative location information.

In order to reduce resources occupied by the location information, according to the device provided by the embodiments of the present disclosure, a solution for calculating the relative location information by using the location information obtained by the last absolute positioning and sending the relative location information is provided, so as to achieve a purpose of compressing transmission data volume. Therefore, the problems in the related art that the number of bytes required by longitude and latitude information is relatively large, and network resource consumption is overlarge during transmission of the location information are solved.

It should be noted that: when the device for reporting location information provided by the above embodiments reports the location information, illustration is given by taking a division of program modules as an example, and in practical applications, the processing may be assigned to and completed by different program modules as needed, that is, the internal structure of the device is divided into different program modules to complete all or part of the above processing. In addition, the device for reporting location information and the method for reporting location information provided in the above embodiments belong to a same concept, specific implementation processes of the device refer to the description of the method embodiments, and are not described herein again.

In an embodiment of the present disclosure, there is provided a device for acquiring location information, which is applied to a positioning request device, and as shown in FIG. 12, the device includes a request sending module 1210, an information receiving module 1220, an information parsing module 1230 and a location determining module 1240.

The request sending module 1210 is configured to send a location information acquisition request to a location calculating device.

The information receiving module 1220 is configured to receive location information sent by the location calculating device.

The information parsing module 1230 is configured to parse carried relative location information out of the location information received by the information receiving module 1220.

The location determining module 1240 is configured to calculate actual location information of the location calculating device according to the relative location information parsed out by the information parsing module 1230 and specified reference location information.

Based on the above structural description, several specific and implementations under the above structure are given below to detail or optimize the function of the device according to the embodiment of the present disclosure, so as to make the implementation of the embodiment of the present disclosure more convenient and accurate. It is to be noted that the following features may be arbitrarily combined without conflict.

In an embodiment of the present disclosure, the information parsing module 1230 is configured to parse a location information unit in the location information, and extract the relative location information from a relative location information unit in the location information unit.

Optionally/possibly, in an embodiment of the present disclosure, the information parsing module 1230 is configured to detect identification information carried in the location information, and parse the carried relative location information out of the location information when the detected identification information indicates that the sent location information is relative location information.

Optionally/possibly, in an embodiment of the present disclosure, the location determining module 1240 is configured to determine a serving cell in which the location calculating device is located, and take location information of the serving cell as the specified reference location information; and sum the relative location information and the location information of the serving cell (i.e., the specified reference location information) to obtain the actual location information of the location calculating device.

In the embodiment, the location determining module 1240 determines the serving cell of the location calculating device according to unique identification information of the serving cell carried in the location information.

Optionally/possibly, in an embodiment of the present disclosure, the location determining module 1240 is configured to take last recorded positioning location information as the specified reference location information, and sum the relative location information and the last recorded positioning location information (i.e., the specified reference location information) to obtain the actual location information of location calculating device.

Optionally/possibly, in an embodiment of the present disclosure, the location determining module 1240 is configured to take recorded location information obtained by last absolute positioning of the location calculating device as the specified reference location information, and sum the relative location information and the specified reference location information to obtain the actual location information of the location calculating device.

Optionally/possibly, in this embodiment of the present disclosure, the location determining module 1240 is configured to take location information at a reference time point as the specified reference location information, and sum the relative location information and the specified reference location information to obtain the actual location information of the location calculating device.

In the device according to the embodiments, the actual location information of the location calculating device is obtained by using the relative location information sent by the location calculating device, and the problem of overlarge network resource consumption due to that all location information such as longitude and latitude information needs to be sent among devices in the related art is solved.

It should be noted that: when the device for acquiring location information provided by the above embodiments acquires location information, illustration is given by taking a division of program modules as an example, and in practical applications, the processing may be assigned to and completed by different program modules as needed, that is, the internal structure of the device is divided into different program modules to complete all or part of the above processing. In addition, the device for acquiring location information and the method for acquiring location information provided in the above embodiments belong to a same concept, specific implementation processes of the device refer to the description of the method embodiments, and are not described herein again.

In an embodiment of the present disclosure, there is provided a device for reporting location information, including: a processor and a memory configured to store a computer program that can be run by the processor, and when the computer program is executed by the processor, the processor performs the steps of the method for reporting location information according to any one of the above embodiments of the present disclosure.

In an embodiment of the present disclosure, there is provided a device for acquiring location information, including: a processor and a memory configured to store a computer program than can be run by the processor, and when the computer program is executed by the processor, the processor performs the steps of the method for acquiring location information according to any one of the above embodiments of the present disclosure.

It will be appreciated that the memory may be implemented by any type of volatile or non-volatile memory device, or combination thereof. The non-volatile memory may be a Read Only Memory (ROM), a Programmable Read-Only Memory (PROM), an Erasable Programmable Read-Only Memory (EPROM), an Erasable Programmable Read-Only Memory (EEPROM), an Electrically Erasable Programmable Read-Only Memory (EEPROM), a Ferromagnetic Random Access Memory (FRAM), a Flash Memory (Flash Memory), a magnetic surface memory, an optical disc, or a Compact Disc Read-Only Memory (CD-ROM); the magnetic surface memory may be a disk memory or tape memory. The volatile memory may be Random Access Memory (RAM), which is used as external cache memory. By way of illustration but not limitation, many forms of RAM can be used, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Enhanced Synchronous Random Access Memory (DRAM), SyncLink Dynamic Random Access Memory (SLDRAM), Direct Rambus Random Access Memory (DRRAM). The memory described in the embodiments of the present disclosure is intended to include, but is not limited to, these and any other suitable memory.

The method disclosed by the embodiments of the present disclosure may be applied to a processor or realized by a processor. The processor may be an integrated circuit chip and has signal processing capabilities. In implementation, the steps of the above method may be performed by an integrated logic circuit in a form of hardware or instructions in a form of software in a processor. The processor may be a general purpose processor, a Digital Signal Processor (DSP), or other programmable logic device, discrete gate or transistor logic device, discrete hardware components, etc. The processor may implement or perform the methods, steps, and logic blocks disclosed in the embodiments of the present disclosure. The general purpose processor may be a microprocessor or any conventional processor or the like. The steps of the method disclosed in connection with the embodiments of the present disclosure may be directly implemented by a hardware decoding processor, or may be implemented by a combination of hardware and software modules in the decoding processor. The software modules may be stored in a storage medium that is located in a memory, and the process reads the information in the memory to perform the steps of the above method in connection with its hardware.

In an embodiment of the present disclosure, a computer-readable storage medium is provided, on which a computer program is stored, and the computer program, when executed by a processor, cause the processor to implement the steps of the method for reporting location information according to any one of the above embodiments of the present disclosure; alternatively, the computer program, when executed by a processor, cause the processor to implement the steps of the method for acquiring location information according to any one of the above embodiments of the present disclosure.

Those skilled in the art will appreciate that all or part of the steps in various methods of the above embodiments may be implemented by related hardware instructed by a program, and the program may be stored in a computer-readable storage medium, and the storage medium may include: ROM, RAM, magnetic or optical disks, and the like.

In short, the above description is description of only the embodiments of the present disclosure, and is not intended to limit the protection scope of the present disclosure. Any modification, equivalent replacement, or improvement made within the spirit and principle of the present disclosure should be included in the protection scope of the present disclosure.

## Claims

1. A method for reporting location information, applied to a location calculating device and comprising:
receiving a location information acquisition request sent by a positioning request device;
determining relative location information of a current location of the location calculating device relative to a specified reference location based on the location information acquisition request; and
sending location information carrying the relative location information to the positioning request device.

2. The method of claim 1, wherein the location information further carries identification information for indicating that the sent location information is relative location information.

3. The method of claim 1, wherein determining the relative location information of the current location of the location calculating device relative to the specified reference location comprises:
determining current location information of the location calculating device; and
calculating a difference between the current location information and location information of a serving cell in which the location calculating device is located to obtain the relative location information,
wherein the location information also carries unique identification information of the serving cell.

4. The method of claim 1, wherein determining the relative location information of the current location of the location calculating device relative to the specified reference location comprises:
determining current location information of the location calculating device; and
calculating a difference between the current location information and last recorded positioning location information to obtain the relative location information.

5. The method of claim 1, wherein determining the relative location information of the current location of the location calculating device relative to the specified reference location comprises:
determining current location information of the location calculating device; and
calculating a difference between the current location information and recorded location information obtained by last absolute positioning to obtain the relative location information,
wherein the absolute positioning comprises: calculating location information by adopting a set absolute positioning algorithm.

6. The method of claim 1, wherein determining the relative location information of the current location of the location calculating device relative to the specified reference location comprises:
acquiring a reference time point; and
calculating the relative location information taking the reference time point as a starting point by adopting a set relative positioning algorithm.

7. The method of any one of claims 1 to 6, wherein sending the location information to the positioning request device comprises:
sending the location information to the positioning request device according to a configured location information reporting period; or
sending the location information carrying a timestamp of a time at which the location information is reported to the positioning request device.

8. The method of claim 7, wherein sending the location information to the positioning request device according to the configured location information reporting period comprises:
receiving a location information reporting period from the positioning request device, and sending the location information to the positioning request device according to the location information reporting period; or
sending the location information to the positioning request device according to a location information reporting period configured by a high layer.

9. The method of claim 1, further comprising:
sending location information obtained by absolute positioning to the positioning request device periodically or as required according to preset configuration information.

10. The method of claim 1, wherein the location information further carries one of the following information: altitude information of the location calculating device, reliability information of the altitude information, and reliability information of the relative location information.

11. A method for acquiring location information, applied to a positioning request device and comprising:
sending a location information acquisition request to a location calculating device;
receiving location information sent by the location calculating device;
parsing carried relative location information out of the location information; and
calculating actual location information of the location calculating device according to the relative location information and specified reference location information.

12. The method of claim 11, parsing the carried relative location information out of the location information comprises:
detecting identification information carried in the location information; and
parsing the carried relative location information out of the location information in response that the detected identification information indicates that the sent location information is relative location information.

13. The method of claim 11, wherein calculating the actual location information of the location calculating device according to the relative location information and the specified reference location information comprises:
determining a serving cell in which the location calculating device is located according to unique identification information of the serving cell carried in the location information, and taking location information of the serving cell as the specified reference location information; and
summing the relative location information and the specified reference location information to obtain the actual location information of the location calculating device.

14. The method of claim 11, wherein calculating the actual location information of the location calculating device according to the relative location information and the specified reference location information comprises:
taking last recorded positioning location information as the specified reference location information; and
summing the relative location information and the specified reference location information to obtain the actual location information of the location calculating device.

15. The method of claim 11, wherein calculating the actual location information of the location calculating device according to the relative location information and the specified reference location information comprises:
taking recorded location information obtained by last absolute positioning of the location calculating device as the specified reference location information; and
summing the relative location information and the specified reference location information to obtain the actual location information of the location calculating device.

16. The method of claim 11, wherein calculating the actual location information of the location calculating device according to the relative location information and the specified reference location information comprises:
taking location information at a reference time point as the specified reference location information; and
summing the relative location information and the specified reference location information to obtain the actual location information of the location calculating device.

17. A device for reporting location information, applied to a location calculating device and comprising:
a request receiving module configured to receive a location information acquisition request sent by a positioning request device;
a location calculating module configured to determine relative location information of a current location of the location calculating device relative to a specified reference location based on the location information acquisition request received by the request receiving module; and
an information reporting module configured to send location information carrying the relative location information to the positioning request device.

18. The device of claim 17, wherein the location calculating module is configured to:
determine current location information of the location calculating device, and
calculate a difference between the current location information and location information of a serving cell in which the location calculating device is located to obtain the relative location information,
wherein the location information also carries unique identification information of the serving cell.

19. The device of claim 17, wherein the location calculating module is configured to:
determine current location information of the location calculating device, and
calculate a difference between the current location information and last recorded positioning location information to obtain the relative location information.

20. The device of claim 17, wherein the location calculating module is configured to:
determine current location information of the location calculating device, and
calculate a difference between the current location information and recorded location information obtained by last absolute positioning to obtain the relative location information,
wherein the absolute positioning comprises: calculating location information by adopting a set absolute positioning algorithm.

21. The device of claim 17, wherein the location calculating module is configured to:
acquire a reference time point, and
calculate the relative location information taking the reference time point as a starting point by adopting a set relative positioning algorithm.

22. A device for acquiring location information, applied to a positioning request device and comprising:
a request sending module configured to send a location information acquisition request to a location calculating device;
an information receiving module configured to receive location information sent by the location calculating device;
an information parsing module configured to parse carried relative location information out of the location information received by the information receiving module; and
a location determining module configured to calculate actual location information of the location calculating device according to the relative location information parsed out by the information parsing module and specified reference location information.

23. The device of claim 22, wherein the location determining module is configured to:
determine a serving cell in which the location calculating device is located according to unique identification information of the serving cell carried in the location information, and take location information of the serving cell as the specified reference location information, and
sum the relative location information and the specified reference location information to obtain the actual location information of the location calculating device.

24. The device of claim 22, wherein the location determining module is configured to;
take last recorded positioning location information as the specified reference location information, and
sum the relative location information and the specified reference location information to obtain the actual location information of the location calculating device.

25. The device of claim 22, wherein the location determining module is configured to:
take recorded location information obtained by last absolute positioning of the location calculating device as the specified reference location information, and
sum the relative location information and the specified reference location information to obtain the actual location information of the location calculating device.

26. The device of claim 22, wherein the location determining module is configured to:
take location information at a reference time point as the specified reference location information, and
sum the relative location information and the specified reference location information to obtain the actual location information of the location calculating device.

27. A computer-readable storage medium, storing thereon a computer program, wherein the computer program, when executed by a processor, causes the processor to implement steps of the method for reporting location information according to any one of claims 1 to 10; or
the computer program, when executed by a processor, causes the processor to implement steps of the method for acquiring location information of any one of claims 11 to 16.

28. A device for reporting location information, comprising: a processor and a memory for storing a computer program capable of being executed by the processor, wherein when the computer program is executed by the processor, the processor implements steps of the method for reporting location information according to any one of claims 1 to 10.

29. A device for acquiring location information, comprising: a processor and a memory for storing a computer program capable of being executed by the processor, wherein when the computer program is executed by the processor, the processor implements steps of the method for acquiring location information of any one of claims 11 to 16.
